# EUROPEAN PATENT APPLICATION

(11) **EP 3 913 452 A1**
(43) Date of publication of application: **24.11.2021**
(21) Application number: 20763762.0
(22) Date of filing: 18.02.2020
(51) Int. Cl.: G05B 23/02, G05B 19/418

(54) **OPERATING INDEX PRESENTING DEVICE, OPERATING INDEX PRESENTING METHOD, AND PROGRAM**

(30) Priority: 26.02.2019 JP 2019033276
(71) Applicant: MITSUBISHI HEAVY INDUSTRIES, LTD., Chiyoda-ku, Tokyo 100-8332 (JP)
(72) Inventor: WAKASUGI, Kazuyuki, Tokyo 100-8332 (JP); YOSHIDA, Kazuki, Tokyo 100-8332 (JP); ENOMOTO, Tomoyuki, Tokyo 100-8332 (JP); KOKAJI, Satoshi, Tokyo 100-8332 (JP); TANABE, Toshiaki, Tokyo 100-8332 (JP); TESHIMA, Teppei, Tokyo 100-8332 (JP)
(74) Representative: Studio Torta S.p.A.
(86) International application number: PCT/JP2020/006258
(87) International publication number: WO 2020/175239

(57) **Abstract**

A demand prediction unit predicts a time series of demand values related to a predetermined prediction period using a predictive model. The predictive model is a learned model learned to output a demand value of an energy source by inputting an operation plan value of a plant and a predicted value related to an environment of the plant. An optimizing unit specifies operating indices of a plant that satisfy a plurality of demand values and satisfy a desired condition for each time related to the predicted time series of demand values. A presentation unit presents information related to the time series of operating indices related to the prediction period.

## Description

### [Technical Field]

The present invention relates to an operating index presenting device, an operating index presenting method, and a program of a plant.

Priority is claimed on Japanese Patent Application No. 2019-033276, filed February 26, 2019, the content of which is incorporated herein by reference.

### [Background Art]

Patent Literature 1 discloses an operation optimization method for minimizing cost in a factory.

### [Citation List]

### [Patent Literature]

[Patent Literature 1]
Japanese Unexamined Patent Application, First Publication No. 2005-55997

### [Summary of Invention]

### [Technical Problem]

According to a technology disclosed in Patent Literature 1, an optimum solution of an operation at a certain time can be obtained. On the other hand, since a condition for the optimum operation changes according to fluctuations in the future energy demands in operations of an energy plant, there is a need to perform a prediction of future operations of the plant.

An object of the present invention is to provide an operating index presenting device, an operating index presenting method, and a program that can perform a prediction of future operations of a plant.

### [Solution to Problem]

According to a first aspect of the present invention, an operating index presenting device includes a demand prediction unit configured to predict a time series of demand values related to a predetermined prediction period using a predictive model that is a learned model learned to output a demand value of an energy source by inputting an operation plan value of a plant and a predicted value related to an environment of the plant, an optimizing unit configured to specify a time series of operating indices related to the prediction period by specifying the operating indices of the plant that satisfy a plurality of demand values and satisfy a desired condition for each time related to the predicted time series of demand values, and a presentation unit configured to present information related to the time series of operating indices related to the prediction period.

According to a second aspect of the present invention, in the operating index presenting device according to the first aspect, the optimizing unit may specify the operating indices on the basis of a plurality of models that simulate behaviors of a plurality of components of the plant, and the plurality of models may include at least one learned model learned on the basis of a combination of an input value and an output value related to a component simulated by the plurality of models.

According to a third aspect of the present invention, in the operating index presenting device according to the first or second aspect, the plant may include a plurality of supply means for one energy source, and the optimizing unit may specify a value related to a proportion of outputs by the plurality of supply means as the operating index.

According to a fourth aspect of the present invention, in the operating index presenting device according to any one of the first to third aspects, the optimizing unit may calculate an evaluation value that increases as cost in the plant increases on the basis of the operating index and as operations to be avoided in the plant increases, and specify the operating index such that the evaluation value is small.

According to a fifth aspect of the present invention, an operating index presenting method includes predicting a time series of demand values related to a predetermined prediction period using a predictive model that is a learned model learned to output a demand value of an energy source by inputting an operation plan value of a plant and a predicted value related to an environment of the plant, specifying a time series of operating indices related to the prediction period by specifying operating indices of the plant that satisfy a plurality of demand values and satisfy a desired condition for each time related to the predicted time series of demand values, and presenting information related to the time series of operating indices related to the prediction period.

According to a sixth aspect of the present invention, a program causes a computer to execute predicting a time series of demand values related to a predetermined prediction period using a predictive model that is a learned model learned to output a demand value of an energy source by inputting an operation plan value of a plant and a predicted value related to an environment of the plant, specifying a time series of operating indices related to the prediction period by specifying operating indices of the plant that satisfy a plurality of demand values and satisfy a desired condition for each time related to the predicted time series of demand values, and presenting information related to the time series of operating indices related to the prediction period.

### [Advantageous Effects of Invention]

According to at least one of the aspects described above, a user can predict the future operation of a plant by recognizing information presented by the operating index presenting device.

### [Brief Description of Drawings]

FIG. 1 is a diagram which shows an outline of an operating index presenting device according to an embodiment.
FIG. 2 is a schematic block diagram which shows a configuration of the operating index presenting device according to the embodiment.
FIG. 3 is a flowchart which shows an operation of the operating index presenting device according to the embodiment.
FIG. 4 is a schematic block diagram which shows a configuration of a computer according to at least one embodiment.

### [Description of Embodiments]

Hereinafter, embodiments will be described in detail with reference to the drawings.

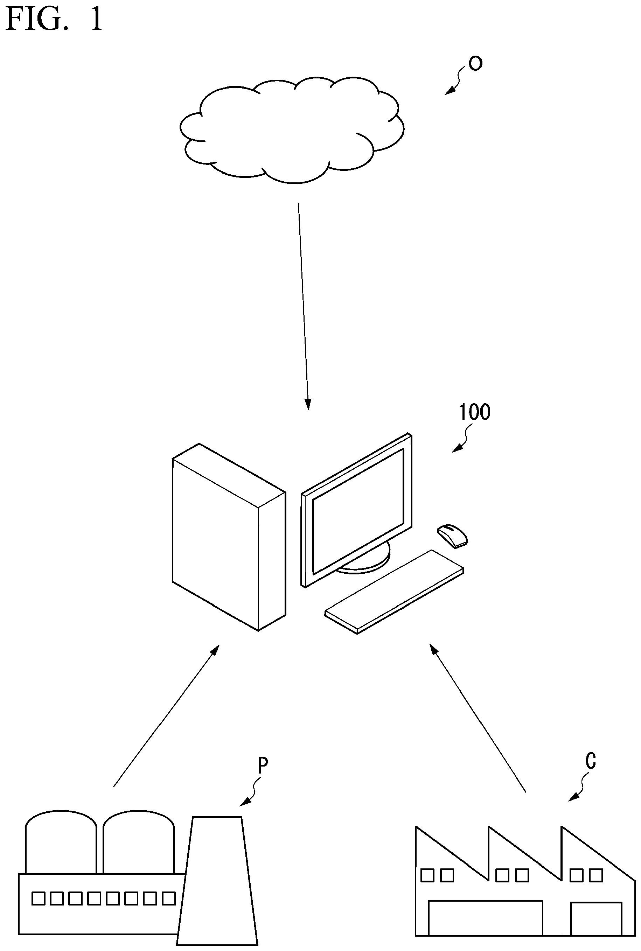

FIG. 1 is a diagram which shows an outline of an operating index presenting device according to an embodiment.

The operating index presenting device 100 predicts a demand of an energy source by a consumer C such as a factory for a certain period in the future, and presents an operating index of a plant P for satisfying the demand. Examples of the energy source include electricity, hot water, cold water, steam, and the like. Hereinafter, the period for which a demand is predicted is referred to as a prediction period.

The plant P includes two or more supply means for each energy source. For example, the plant P uses steam generation by a gas engine and steam generation by a once-through boiler as steam supply means.

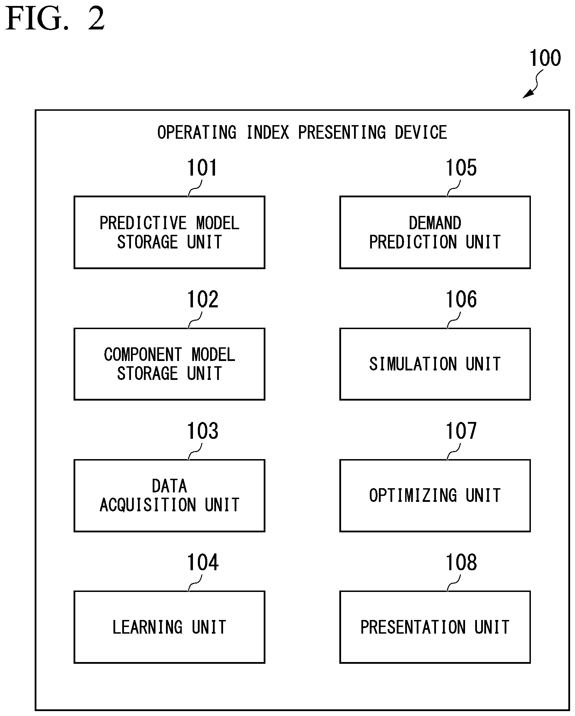

FIG. 2 is a schematic block diagram which shows a configuration of the operating index presenting device according to the embodiment.

The operating index presenting device 100 includes a predictive model storage unit 101, a component model storage unit 102, a data acquisition unit 103, a learning unit 104, a demand prediction unit 105, a simulation unit 106, an optimizing unit 107, and a presentation unit 108.

The predictive model storage unit 101 stores a predictive model that is a learned model learned to output demand values of a plurality of energy sources by inputting an operation plan value of the plant P and a predicted value related to an environment of the plant P. The "learned model" in the present embodiment is a combination of a machine learning model and a learned parameter. Examples of the machine learning model include, for example, a neural network, a Bayesian network, linear regression, a regression tree, and the like. If a predicted value and an actual value of a learned model deviate from each other, re-learning may be performed. As a result, it is possible to prevent an effect of deterioration over time and the like.

The component model storage unit 102 stores a component model that simulates a behavior of each of a plurality of components constituting the plant P. The component model consists of a learned model or a mathematical model. The component model storage unit 102 stores at least one of each of a component model consisting of a learned model and a component model consisting of a mathematical model on the basis of design information of a component. It is preferable that a component whose performance may change due to deterioration over time or the like be simulated by the learned model. That is, in the present embodiment, the plant P is represented as a hybrid model in which a part of a device configuration is physically modeled and the rest is statistically modeled.

The data acquisition unit 103 acquires data used for predicting a demand of a consumer and data used for learning a model. Specifically, the data acquisition unit 103 acquires operation result data and operation plan data from the plant P. The operation result data includes a consumption amount of a primary energy source of the plant P, a supply amount of a secondary energy source (fuel, or the like), a state of a component, and a control amount of a component. The operation plan data is represented by a time series of generation amounts of secondary energy. Moreover, the data acquisition unit 103 acquires environment data and demand result data from the past from the consumer C. The demand result data is represented by a time series of demand values of energy from the past. Examples of the environment data include an indoor temperature of a factory, and the like. In addition, the data acquisition unit 103 acquires weather information, and information such as a price of the primary energy source, and a power purchase price from an external server. The weather information and the indoor temperature of a factory are examples of predicted values related to the environment of the plant.

The learning unit 104 learns a predictive model and a component model on the basis of data acquired by the data acquisition unit 103. Specifically, the learning unit 104 learns a predictive model using a learning data set in which the operation plan data of the plant P from the past, the weather information, and a value of the indoor temperature of a factory are set as input samples and demand result data is set as an output sample. The learned predictive model is recorded in the predictive model storage unit 101. Moreover, the learning unit 104 learns a component model using a learning data set in which a value related to an input of a component in the operation result data is set as an input sample and a value related to an output of a component in the operation result data is set as an output sample. The learned component model is recorded in the component model storage unit 102.

The learning unit 104 may be provided in a device which is separate from the operating index presenting device 100. In this case, a learned model learned in the separate device is to be recorded in the predictive model storage unit 101 and the component model storage unit 102.

The demand prediction unit 105 predicts the time series of demand values related to a prediction period by inputting operation plan data related to the prediction period acquired by the data acquisition unit 103, a time series of weather information, and a time series of the indoor temperatures of a factory to the predictive model stored in the predictive model storage unit 101. The indoor temperature of a factory related to the prediction period is, for example, a value estimated on the basis of the indoor temperature of the factory from the past.

The simulation unit 106 simulates a behavior of a plant by using a plurality of component models stored in the component model storage unit 102. The simulation unit 106 calculates a generation amount of a plurality of secondary energy sources on the basis of the supply amount of the primary energy source and the control amount of a component.

The optimizing unit 107 specifies an operating index of the plant P that satisfies the demand values predicted by the demand prediction unit 105 and minimizes a cost using a result of the calculation by the simulation unit 106. Specifically, the optimizing unit 107 calculates a sum of a cost function, which takes a larger value as the cost in the plant P increases, and a penalty function applied to operations to be avoided in the plant P as an evaluation value. The optimizing unit 107 specifies the operating index so that the evaluation value becomes small. Examples of the cost of the plant P include a purchase cost of primary energy, a power purchase cost, and a maintenance cost of components. Examples of operations to be avoided in the plant P include operations that do not satisfy demands, operations that generate large amounts of CO2 and NOx, overload operations, operations that frequently start and stop engines, and the like.

The optimizing unit 107 specifies an operating index that minimizes the evaluation value by using, for example, optimization methods such as a dynamic programming, a greedy method, a steepest descent method, and a genetic algorithm. Note that "optimization" in this embodiment includes obtaining an approximate solution.

The presentation unit 108 causes a display to display information indicating the time series of operating indices specified by the optimizing unit 107. For example, the presentation unit 108 displays a graph of a time series of proportions of outputs by each supply means (for example, engine generator 70%, power purchase 30%, or the like) for each energy source supplied by the plant P. In another embodiment, a time series of numerical values related to the outputs by each supply means (for example, engine generator 700 kW, power purchase 300 kW, or the like) may be displayed.

Next, an operation of the operating index presenting device 100 will be described. An example in which learning of a predictive model and a component model is completed is described below.

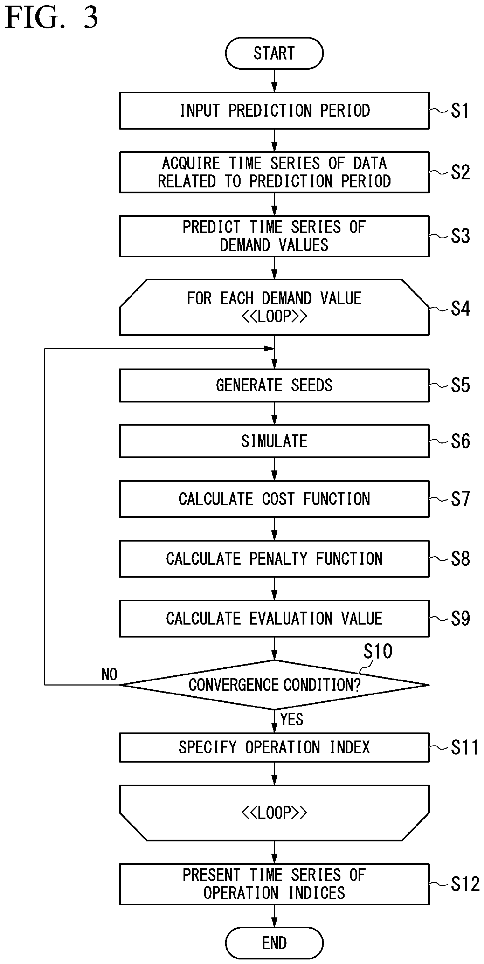

FIG. 3 is a flowchart which shows an operation of the operating index presenting device according to the embodiment.

The data acquisition unit 103 of the operating index presenting device 100 receives an input of a prediction period from a user (step S1). The data acquisition unit 103 acquires an operation plan of the plant P, a time series of weather information, and a time series of indoor temperatures of a factory related to an input prediction period (step S2). The demand prediction unit 105 predicts a time series of demand values related to a prediction period by inputting data acquired in step S 1 into the predictive model stored in the predictive model storage unit 101 (step S3).

The optimizing unit 107 selects the demand values related to the predicted time series one by one, and performs optimization processing of steps S5 to S11 below for each demand value (step S4).

The optimizing unit 107 generates seeds for the supply amount of the primary energy source and the control amount of a component on the basis of a random number (step S5). The simulation unit 106 simulates the behavior of a plant using a plurality of component models stored in the component model storage unit 102, and calculates the generation amount of a secondary energy source on the basis of the generated seeds (step S6).

The optimizing unit 107 calculates a cost function on the basis of the generated seeds, and the purchase cost of primary energy and the power purchase cost acquired by the data acquisition unit 103 (step S7). In addition, the optimizing unit 107 calculates a penalty function on the basis of a behavior of the plant P simulated by the simulation unit 106 and the generation amount of a secondary energy source (step S8). The optimizing unit 107 calculates an evaluation value by adding the cost function and the penalty function (step S9).

The optimizing unit 107 determines whether a predetermined convergence condition is satisfied on the basis of the evaluation value (step S10). The convergence condition is determined by an optimization algorithm. If the convergence condition is not satisfied (NO in step S10), the procedure returns to step S5 and the seeds are generated again. At this time, the optimizing unit generates seeds on the basis of the optimization algorithm. On the other hand, when the convergence condition is satisfied (YES in step S10), the optimizing unit 107 specifies an operating index on the basis of seeds when the evaluation value is a minimum (step S11).

If the optimizing unit 107 specifies operating indices for all timings in the prediction period, the presentation unit 108 displays information indicating a time series of the specified operating indices on the display (step S12).

As described above, according to the present embodiment, the operating index presenting device 100 predicts the time series of demand values related to a predetermined prediction period using the predictive model, and specifies an operating index for each time related to the predicted time series of demand values, thereby specifying the time series of operating indices related to the prediction period. As a result, the operating index presenting device 100 can present information for predicting the future operation of the plant P.

Further, according to the present embodiment, the component model for simulating the behavior of the plant P and the optimizing unit 107 are separately configured. As a result, a designer or maintainer of the operating index presenting device 100 can separate verification of the behavior of the component model from verification of the optimization processing. The designer or maintainer can verify whether the component model can accurately simulate the behavior of the plant P in the past by using past operation data for the verification of the component model.

In addition, according to the present embodiment, the plant P is provided with a plurality of supply means for each energy source, and the operating index presenting device 100 specifies an operating index related to the operation of each supply means. As a result, the operating index presenting device 100 can specify operating indices for which optimization is achieved by combining each supply means.

Although the embodiment has been described in detail with reference to the drawings, the specific configuration is not limited to the description above, and various design changes and the like can be made. In other embodiments, the order of the processing described above may be changed as appropriate. In addition, some of the processing may be executed in parallel.

The operating index presenting device 100 according to the embodiment described above calculates operating indices at each time of the prediction period such that the evaluation value at a corresponding time is a minimum, but the present invention is not limited thereto. For example, the operating index presenting device 100 according to another embodiment may specify the time series of the operating indices such that a sum of the evaluation values of the entire prediction period is a minimum.

Moreover, the operating index presenting device 100 according to the embodiment described above performs optimization calculation on a condition that the cost is minimized, but the present invention is not limited thereto. For example, the operating index presenting device 100 according to another embodiment may perform optimization calculation on a condition of minimizing an amount of CO2 emissions and optimizing factory operations (maximizing profit by operating the plant P). In this case, as the evaluation value, a value that decreases as the amount of CO₂ emissions is smaller may be used, or a value that decreases as the profit of the plant P increases may be used. For example, when the operating index presenting device 100 according to another embodiment performs the optimization calculation on a condition of optimizing the factory operations, the demand prediction unit 105 of the operating index presenting device 100 further predicts a time series of a fuel cost, a power selling unit price, and a power purchasing unit price in addition to the demand values in the prediction period, and specifies an operating index such that the profit is maximized. The demand values, fuel cost, power selling unit price, and power purchasing unit price may be predicted by the same predictive model, or each may be predicted by a separate predictive model. The operating index includes an amount of fuel purchased and an amount of electricity bought and sold. As a result, the user can appropriately predict a timing of fuel purchasing and a timing of power selling. In this case, it is preferable that the operating index presenting device 100 specify the time series of the operating indices such that the sum of the evaluation values of the entire prediction period is a minimum.

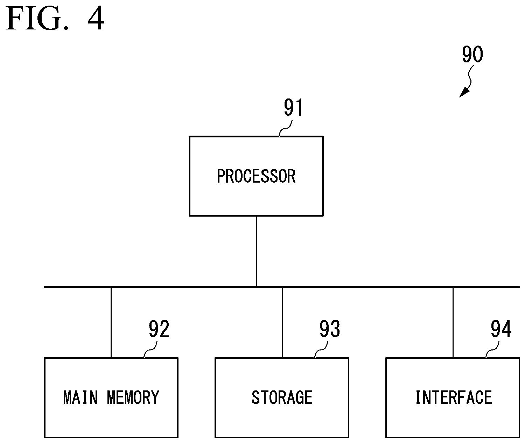

FIG. 4 is a schematic block diagram which shows a configuration of a computer according to at least one embodiment.

A computer 90 includes a processor 91, a main memory 92, a storage 93, and an interface 94.

The operating index presenting device 100 described above is implemented in the computer 90. Then, the operation of each processing unit described above is stored in the storage 93 in the form of a program. The processor 91 reads a program from the storage 93 to expand it to the main memory 92, and executes the processing described above according to the program. Moreover, the processor 91 secures a storage area corresponding to each storage unit described above in the main memory 92 according to the program.

The program may be for realizing a part of functions exerted by the computer 90. For example, the program may exert the functions in combination with another program already stored in the storage 93, or in combination with another program implemented in another device. In another embodiment, the computer 90 may include a custom large scale integrated circuit (LSI) such as a programmable logic device (PLD) in addition to or in place of the configuration described above. Examples of the PLD include a programmable array logic (PAL), a generic array logic (GAL), a complex programmable logic device (CPLD), and a field programmable gate array (FPGA). In this case, a part or all of the functions realized by the processor 91 may be realized by the integrated circuit.

Examples of the storage 93 include a magnetic disk, a magneto-optical disc, an optical disc, a semiconductor memory, and the like. The storage 93 may be an internal media directly connected to a bus of the computer 90, or may be an external media connected to the computer 90 via the interface 94 or a communication line. Moreover, when this program is distributed to the computer 90 by the communication line, the computer 90 that has received this program may expand the program to the main memory 92 and execute the processing described above. In at least one embodiment, the storage 93 is a non-temporary tangible storage medium.

In addition, the program may be for realizing a part of the functions described above. Furthermore, the program may be a so-called difference file (a difference program) that realizes the functions described above in combination with another program already stored in the storage 93.

### [Industrial Applicability]

According to the disclosure of the present application described above, a user can predict the future operation of a plant by recognizing information presented by the operating index presenting device.

### [Reference Signs List]

- 100: Operating index presenting device
- 101: Predictive model storage unit
- 102: Component model storage unit
- 103: Data acquisition unit
- 104: Learning unit
- 105: Demand prediction unit
- 106: Simulation unit
- 107: Optimizing unit
- 108: Presentation unit
- C: Consumer
- P: Plant

## Claims

1. An operating index presenting device comprising:
a demand prediction unit configured to predict a time series of demand values related to a predetermined prediction period using a predictive model that is a learned model learned to output a demand value of an energy source by inputting an operation plan value of a plant and a predicted value related to an environment of the plant;
an optimizing unit configured to specify a time series of operating indices related to the prediction period by specifying the operating indices of the plant that satisfy a plurality of demand values and satisfy a desired condition for each time related to the predicted time series of demand values; and
a presentation unit configured to present information related to the time series of operating indices related to the prediction period.

2. The operating index presenting device according to claim 1,
wherein the optimizing unit specifies the operating indices on the basis of a plurality of models that simulate behaviors of a plurality of components of the plant, and the plurality of models include at least one learned model learned on the basis of a combination of an input value and an output value related to a component simulated by the plurality of models.

3. The operating index presenting device according to claim 2,
wherein the plurality of models further include at least one mathematical model based on design information related to a component simulated by the plurality of models.

4. The operating index presenting device according to any one of claims 1 to 3,
wherein the plant includes a plurality of supply means for one energy source, and
the presentation unit presents a time series of values related to numerical values or proportions of outputs by the plurality of supply means as information related to the time series of the operating indices.

5. The operating index presenting device according to any one of claims 1 to 4,
wherein the optimizing unit calculates an evaluation value that increases as the cost in the plant increases on the basis of the operating index and as operations to be avoided in the plant increases, and specifies the operating index such that the evaluation value is small.

6. The operating index presenting device according to any one of claims 1 to 5, wherein the desired condition includes maximizing a profit by operating the plant.

7. An operating index presenting method comprising:
predicting a time series of demand values related to a predetermined prediction period using a predictive model that is a learned model learned to output a demand value of an energy source by inputting an operation plan value of a plant and a predicted value related to an environment of the plant;
specifying a time series of operating indices related to the prediction period by specifying operating indices of the plant that satisfy a plurality of demand values and satisfy a desired condition for each time related to the predicted time series of demand values; and
presenting information related to the time series of operating indices related to the prediction period.

8. A program for causing a computer to execute:
predicting a time series of demand values related to a predetermined prediction period using a predictive model that is a learned model learned to output a demand value of an energy source by inputting an operation plan value of a plant and a predicted value related to an environment of the plant;
specifying a time series of operating indices related to the prediction period by specifying operating indices of the plant that satisfy a plurality of demand values and satisfy a desired condition for each time related to the predicted time series of demand values; and
presenting information related to the time series of operating indices related to the prediction period.
